# EUROPÄISCHE PATENTSCHRIFT

(11) **EP 2 798 937 B1**
(45) Veröffentlichungstag und Bekanntmachung des Hinweises auf die Patenterteilung: **10.02.2016**
(21) Anmeldenummer: 13002291.6
(22) Anmeldetag: 29.04.2013
(51) Int. Cl.: A01D 34/73

(54) **Arbeitsgerät**
Work device
Appareil de travail

(43) Veröffentlichungstag der Anmeldung: 05.11.2014
(73) Patentinhaber: Viking GmbH, 6336 Langkampfen (AT)
(72) Erfinder: Schimmele, Stefan, 6330 Kufstein (DE); Duregger, Georg, 6342 Niederndorf (AT); Schäfer, Frieder, 72149 Neustetten (DE)
(74) Vertreter: Reinhardt, Annette

(56) Entgegenhaltungen:
- EP-B1- 1 570 719
- WO-A1-2013/048574
- US-B1- 6 367 235

## Beschreibung

Die Erfindung betrifft ein Arbeitsgerät wie beispielsweise einen Rasenmäher oder dergleichen der im Oberbegriff des Anspruchs 1 angegebenen Gattung.

Es ist bekannt, das Messer eines Rasenmähers drehfest mit der Antriebswelle zu verbinden und über ein Befestigungselement, wie beispielsweise eine Mutter, zu sichern. Die Richtung, in der die Mutter angezogen wird, entspricht vorteilhaft der Drehrichtung im Betrieb. Dadurch kann das Messer auf die Mutter keine Kraft in Löserichtung der Mutter aufbringen und die Mutter unbeabsichtigt lösen.

Aus der EP 1 570 719 B1 geht eine Bajonettverbindung des Messers mit dem Messerträger hervor. Zur Fixierung an dem Messerträger wird das Messer gedreht. Zur Sicherung dient ein Verriegelungselement in Form eines Druckknopfes. Die Relativdrehung zwischen Messer und Messerträger soll dabei so gewählt werden, dass die Freigabe des Messers nur dann erfolgt, wenn das Messer in Schneidrichtung verdreht wird.

Die bekannten Befestigungseinrichtungen für Messer an einer Antriebswelle sind für eine Drehrichtung des Messers ausgelegt. Würde sich das Messer in Gegenrichtung drehen, so könnte sich die Befestigungseinrichtung aufgrund der im Betrieb am Messer wirkenden Kräfte lösen.

Der Erfindung liegt die Aufgabe zugrunde, ein Arbeitsgerät der gattungsgemäßen Art zu schaffen, dessen Befestigungseinrichtung das Messer in beiden Drehrichtungen sicher hält.

Diese Aufgabe wird mit den Merkmalen des Anspruchs 1 gelöst.

Es ist eine Fixiereinrichtung vorgesehen, die verhindert, dass das Befestigungselement sich im Betrieb in Löserichtung drehen kann. Das Messer selbst ist drehfest an dem Messerträger gehalten, so dass die am Messer in Drehrichtung oder entgegen der Drehrichtung wirkenden Kräfte über den Messerträger abgefangen und auf die Antriebswelle übertragen werden können. Ebenso wird das Antriebsdrehmoment von der Antriebswelle über den Messerträger auf das Messer übertragen. Dadurch sind die am Befestigungselement wirkenden Kräfte im Betrieb gering. Das Befestigungselement dient lediglich zur Sicherung des Messers in axialer Richtung und nicht zur Übertragung von Drehmomenten. Dadurch kann das Anzugsmoment, mit dem das Befestigungselement in die Befestigungsstellung verstellt wird, gering sein. Dadurch kann das Befestigungselement werkzeuglos, also von Hand, befestigt und gelöst werden. Schläge oder dergleichen auf das Messer wirken auf den Messerträger und nicht unmittelbar auf die Fixiereinrichtung. Dadurch kann die Fixiereinrichtung vergleichsweise klein ausgelegt werden. Durch die Fixiereinrichtung ist ein Antrieb des Messers in beiden Drehrichtungen möglich. Kräfte, die in Löserichtung auf das Befestigungselement wirken, werden von der Fixiereinrichtung aufgenommen. Die Befestigungseinrichtung kann aus wenigen Einzelteilen aufgebaut sein. Dadurch ergibt sich ein einfacher Aufbau.

Vorteilhaft besitzt die Fixiereinrichtung mindestens ein Rastelement, das mit mindestens einem Rastzahn zusammenwirkt. Das Rastelement ist insbesondere mit dem Messerträger verbunden und der Rastzahn mit dem Befestigungselement. Es kann jedoch auch vorteilhaft sein, den Rastzahn am Messerträger anzuordnen und das Rastelement mit dem Befestigungselement zu verbinden. Rastzahn und Rastelement sind dabei vorteilhaft so ausgebildet, dass sich beim Anziehen des Befestigungselements, also beim Verstellen des Befestigungselements in die Befestigungsstellung, ein deutlich hörbares Rastgeräusch ergibt. Für den Bediener ist dadurch deutlich hörbar, dass die Fixiereinrichtung eingerastet, das Befestigungselement also gegen ein Verdrehen in Löserichtung gesichert ist.

Vorteilhaft besitzt der Rastzahn eine Rastkante, die gegenüber einer Radialen zur Drehachse um einen Winkel geneigt ist, der in Löserichtung und bezogen auf die Drehachse radial nach außen öffnet. Dadurch wird ein Hinterschnitt zwischen Rastelement und Rastzahn erreicht. Die Radiale zur Drehachse verläuft dabei durch den Bereich der Rastkante, der der Drehachse am Nächsten liegt, also durch den Fußbereich der Rastkante. Wird das Befestigungselement in Öffnungsrichtung gedreht, wird das Rastelement von dem Rastzahn in Richtung auf die eingerastete Sperrstellung gezogen. Beim Lösen des Rastelements bewirkt das Rastelement eine Verstellung des Befestigungselements in der Befestigungsrichtung. Wird das Rastelement unbeabsichtigt betätigt, beispielsweise aufgrund von im Betrieb von außen wirkenden Kräften, wird zunächst eine weitere Fixierung des Messers erreicht. Der Winkel, den die Rastkante mit der Radialen zur Drehachse einschließt, beträgt insbesondere von etwa 5° bis etwa 60°. Es kann jedoch auch vorteilhaft sein, dass die Rastkante etwa radial zur Drehachse ausgerichtet ist.

Vorteilhaft besitzt der Rastzahn eine Flanke, die beim Bewegen des Befestigungselements in Befestigungsrichtung das Rastelement auslenkt. Dadurch muss das Rastelement beim Befestigen des Befestigungselements nicht vom Bediener betätigt werden. Dadurch ergibt sich eine vereinfachte Bedienung.

Vorteilhaft besitzt das Befestigungselement mindestens vier Rastzähne, die gleichmäßig am Umfang des Befestigungselements verteilt angeordnet sind. Insbesondere sind mindestens acht, vorteilhaft mehr als acht Rastzähne vorgesehen. Als besonders vorteilhaft haben sich zwölf Rastzähne herausgestellt. Durch eine vergleichsweise große Anzahl von Rastzähnen wird eine Vielzahl von gesicherten Stellungen für das Befestigungselement erreicht. Dadurch kann das Befestigungselement in einer vollständig fixierten Position gesichert werden. Gleichzeitig ist die Anzahl der Rastzähne vorteilhaft nur so groß, dass die Flanken der Rastzähne noch eine ausreichend geringe Neigung gegenüber der Umfangsrichtung besitzen, so dass die Flanken der Rastzähne ein sicheres Auslenken der Rastelemente bei geringen Betätigungskräften bewirken.

Vorteilhaft ist das Rastelement an einem Hebel angeordnet, der um eine Schwenkachse schwenkbar gelagert ist. Der Hebel ist vorzugsweise am Messerträger gelagert. Auch eine Lagerung am Befestigungselement kann jedoch vorteilhaft sein. Zweckmäßig besitzt der Hebel einen Betätigungsabschnitt. An dem Betätigungsabschnitt kann der Bediener den Hebel betätigen und dadurch die Fixiereinrichtung aus einer Sperrstellung in eine Freigabestellung verstellen, in der das Befestigungselement gelöst werden kann. Der Betätigungsabschnitt und das Rastelement sind vorteilhaft auf gegenüberliegenden Seiten der Schwenkachse angeordnet. Dadurch ergibt sich eine ergonomische Gestaltung und ein kompakter Aufbau. Der Hebel ist dabei insbesondere so gefedert, dass der Hebel in unbetätigtem Zustand des Betätigungsabschnitts in Richtung auf die Sperrstellung vorgespannt ist. Dadurch gleitet das Rastelement beim Anziehen des Betätigungselements an den Rastzähnen ab und verursacht ein Rastgeräusch. Die Federung des Hebels ist vorteilhaft so ausgelegt, dass das Rastgeräusch für den Bediener deutlich hörbar ist. Dadurch erhält der Bediener beim Fixieren des Befestigungselements eine akustische Rückmeldung darüber, ob die Fixiereinrichtung wie gewünscht arbeitet oder, beispielsweise, wenn das Rastgeräusch ausbleibt, beschädigt ist.

Es kann vorgesehen sein, dass der Hebel als separates Bauteil ausgeführt und an dem Messerträger oder dem Befestigungselement gelagert ist. Der Hebel kann dabei in Richtung auf eine Position, insbesondere in Richtung auf die Sperrstellung, gefedert gelagert sein. Eine einfache Gestaltung ergibt sich, wenn der Hebel über mindestens ein elastisches Biegeelement mit dem Messerträger verbunden ist. Der Messerträger ist insbesondere einteilig mit dem Hebel und dem Biegeelement ausgebildet. Dadurch ergibt sich einfacher Aufbau und eine geringe Anzahl von Einzelteilen. Der Hebel ist vorteilhaft so an dem Messerträger gelagert, dass die im Betrieb auf den Hebel wirkende Fliehkraft ein Moment auf den Hebel in Richtung auf die Sperrstellung ausübt. Dies wird vorteilhaft dadurch erreicht, dass der Arm des Hebels, an dem der Betätigungsabschnitt angeordnet ist, ein größeres Gewicht besitzt als der Arm des Hebels, an dem das Rastelement angeordnet ist.

Vorteilhaft sind zwei einander gegenüberliegend angeordnete Hebel mit jeweils mindestens einem Rastelement vorgesehen. Die Hebel sind dabei insbesondere so angeordnet, dass sie mit einer Hand von dem Bediener betätigt werden können. Dadurch, dass zwei Hebel vorgesehen sind, wird eine sichere Verrastung auch bei Beschädigung eines der Rastelemente erreicht. Die Rastelemente sind vorteilhaft für den Bediener sichtbar. Dadurch ist das Öffnungsprinzip für den Anwender leicht erkennbar.

Der Hebel besitzt insbesondere eine Sperrstellung, in der das Befestigungselement gegen ein Verdrehen in Löserichtung gesichert ist, und eine Freigabestellung. Beim Verschwenken des Hebels von der Sperrstellung in die Freigabestellung übt der Hebel vorteilhaft eine Kraft in Befestigungsrichtung auf das Befestigungselement aus. Dadurch kann ein unbeabsichtigtes Lösen des Befestigungselements verhindert werden. Gleichzeitig wird aufgrund der vom Befestigungselement ausgeübten Gegenkraft die Kraft zum Lösen des Rastelements erhöht, so dass ein unbeabsichtigtes Lösen des Rastelements bei geringen Kräften verhindert ist. Der Hebel, insbesondere die Hebel werden vorteilhaft entgegen der Öffnungsrichtung des Befestigungselements verschwenkt, um die Fixiereinrichtung zu lösen. Dadurch ergibt sich eine gute Ergonomie.

Der Hebel ist insbesondere in Umfangsrichtung der Drehachse des Messers ausgerichtet. Vorteilhaft besitzt der Messerträger eine Vertiefung, in der der Hebel angeordnet ist. Der Hebel ragt insbesondere nicht über einen Kreisbogen hinaus, der sich von einer ersten Außenkante der Vertiefung zu einer zweiten Außenkante der Vertiefung erstreckt und dessen Mittelpunkt auf der Drehachse liegt. Der Hebel ist dadurch im Windschatten des Messerträgers angeordnet. Dadurch wird der Hebel vor direkter Kollision mit Hindernissen wie beispielsweise Steinen oder dergleichen geschützt. Gleichzeitig ergibt sich ein günstiges Geräuschverhalten. Es kann jedoch auch vorgesehen sein, dass der Hebel über diese Vertiefung hinausragt. Die Ausrichtung des Hebels in Umfangsrichtung der Drehachse des Messers bedingt einen kompakten Aufbau der Befestigungseinrichtung. Vorteilhaft ist der Hebel gegen übermäßige Durchbiegung in Richtung der Drehachse des Messers gesichert. Eine einfache Gestaltung ergibt sich, wenn das Befestigungselement mindestens einen Abschnitt des Hebels in Richtung der Drehachse überdeckt. Dadurch kann der Hebel nicht über die Ebene des Befestigungselements hinaus umgebogen werden. Vorteilhaft überdeckt der Messerträger mindestens einen Abschnitt des Hebels in Richtung der Drehachse. Dadurch ist der Hebel in Gegenrichtung vor einer übermäßigen Durchbiegung geschützt.

Ein einfacher Aufbau ergibt sich, wenn das Befestigungselement ein Gewinde besitzt und auf die Antriebswelle aufschraubbar ist. Anstatt eines Gewindes kann jedoch auch eine Bajonettverbindung oder dergleichen vorgesehen sein. Das Gewinde ist insbesondere an einem metallischen Gewindeelement ausgebildet, das drehfest am Befestigungselement gehalten ist. Dadurch wird eine gute Festigkeit des Gewindes erreicht. Gleichzeitig bildet das Befestigungselement einen von Hand nicht überdrehbaren axialen Anschlag. Insbesondere ist das Gewindeelement eine Gewindehülse, die in das Befestigungselement eingespritzt ist. Dadurch, dass der Gewindeeinsatz eingespritzt ist, ist er vor Verschmutzung und Korrosion geschützt. Das Gewindeelement kann jedoch auch eine drehfest am Befestigungselement gehaltene Mutter sein.

Das Befestigungselement besitzt vorteilhaft ein Griffprofil und eine Eingriffskontur für ein Werkzeug. Über das Griffprofil kann das Befestigungselement schnell und einfach werkzeuglos an dem Messerträger montiert werden. Da das Befestigungselement nur eine axiale Sicherung des Messers bildet und das Befestigungselement selbst in Löserichtung von der Fixiereinrichtung gesichert ist, ist ein geringes Anzugsmoment des Befestigungselements ausreichend. Dadurch ist eine werkzeuglose Befestigung des Messers möglich. Über die Eingriffskontur kann auf das Befestigungselement eine große Kraft ausgeübt werden, beispielsweise, um das Befestigungselement zu lösen, wenn ein Gewinde des Befestigungselements aufgrund von Verschmutzung, Korrosion oder dgl. festsitzt und sich von Hand nicht oder nur schwer lösen lässt. Die Eingriffskontur ist dabei vorteilhaft nur als Sicherheitseinrichtung für den Fall vorgesehen, dass das Befestigungselement sich nicht werkzeuglos lösen lässt. Vorteilhaft ist die Eingriffskontur an einem Gewindeelement ausgebildet, das vorteilhaft eine Außenkontur besitzt, an der ein Werkzeug angreifen kann. Das Werkzeug kann dabei unmittelbar an der Außenkontur des Gewindeelements angreifen. Vorzugsweise ist die Außenkontur jedoch von einer Wand des Befestigungselements mit entsprechender Kontur umgeben. Die Außenkontur des Gewindeelements dient dabei vorteilhaft sowohl zur drehfesten Fixierung des Gewindeelements am Befestigungselement als auch zur Übertragung einer Kraft von einem Werkzeug über die Wand des Befestigungselements auf das Gewindeelement. Vorteilhaft ist das Gewindeelement eine Sechskantmutter, die in einem Sechskanteinsatz des Befestigungselements gehalten ist. Der Sechskanteinsatz weist vorteilhaft eine Sechskantaußenkontur auf, die mit einem Schraubenschlüssel üblicher Schlüsselweite gegriffen und verdreht werden kann.

Der Messerträger besitzt vorteilhaft eine metallische Hülse, durch die die Antriebswelle ragt und an der das Messer anliegt. Die metallische Hülse bildet einen festen Anschlag für das Messer, so dass sich eine gute Festigkeit der Schraubverbindung ergibt. Die metallische Hülse kann gleichzeitig die drehfeste Verbindung zwischen der Antriebswelle und dem Messerträger herstellen. Hierzu besitzt die metallische Hülse vorteilhaft Abflachungen, die mit entsprechenden Abflachungen einer Öffnung im Messerträger zusammenwirken.

Ein Ausführungsbeispiel der Erfindung wird im Folgenden anhand der Zeichnung erläutert. Es zeigen:
- Fig. 1: eine schematische Darstellung eines Arbeitsgeräts,
- Fig. 2: eine schematische Schnittdarstellung durch die Antriebswelle und das Messer des Arbeitsgeräts aus Fig. 1,
- Fig. 3: eine perspektivische Ansicht auf die Anordnung aus Fig. 2 von unten,
- Fig. 4: eine vergrößerte Ansicht des Bereichs eines Rastelements aus Fig. 3,
- Fig. 5: eine perspektivische Ansicht auf den Messerträger von der dem Messer zugewandten Seite,
- Fig. 6: eine perspektivische Ansicht des Messerträgers von der dem Antriebsmotor zugewandten Seite,
- Fig. 7: eine perspektivische Ansicht des Befestigungselements von der dem Messer zugewandten Seite,
- Fig. 8: eine perspektivische Ansicht des Befestigungselements von der dem Messer abgewandten Seite,
- Fig. 9: eine schematische Darstellung der Fixiereinrichtung in Freigabestellung,
- Fig. 10: eine schematische Schnittdarstellung entsprechend Fig. 2 durch ein Ausführungsbeispiel einer Befestigungseinrichtung,
- Fig. 11: eine perspektivische Ansicht auf die Anordnung aus Fig. 10 von unten,
- Fig. 12: eine vergrößerte Ansicht des Bereichs eines Rastelements aus Fig. 11,
- Fig. 13: eine perspektivische Ansicht auf den Messerträger aus Fig. 10 von der dem Messer zugewandten Seite,
- Fig. 14: eine perspektivische Ansicht des Messerträgers aus Fig. 10 von der dem Antriebsmotor zugewandten Seite,
- Fig. 15: eine perspektivische Ansicht des Befestigungselements aus Fig. 10 von der dem Messer zugewandten Seite,
- Fig. 16: eine perspektivische Ansicht des Befestigungselements aus Fig. 10 von der dem Messer abgewandten Seite.

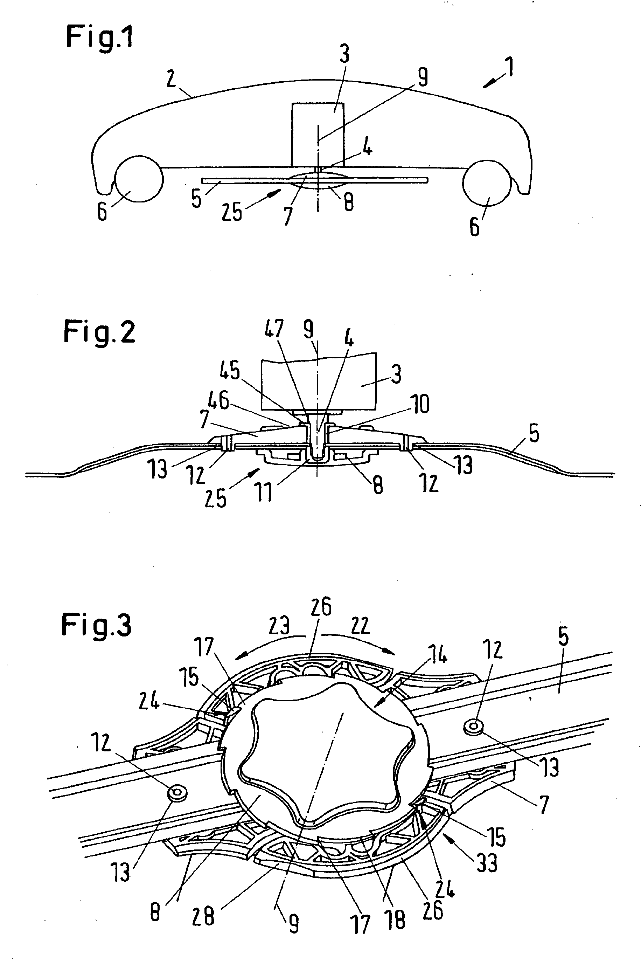

Fig. 1 zeigt als Ausführungsbeispiel für ein Arbeitsgerät einen Rasenmäher 1. Der Rasenmäher 1 ist als selbstfahrender Rasenmäher ausgebildet, der sich in einem vordefinierten Bereich frei bewegt und nicht von einem Bediener geführt oder geschoben wird. Der Rasenmäher 1 kann jedoch auch von einem Bediener geführt sein. Hierzu besitzt der Rasenmäher 1 vorteilhaft einen Griffbügel. Der Rasenmäher 1 besitzt ein Gehäuse 2, in dem ein Antriebsmotor 3 angeordnet ist. Der Antriebsmotor 3 treibt eine Antriebswelle 4 um eine Drehachse 9 rotierend an. An der Antriebswelle 4 ist ein Werkzeug, nämlich ein Messer 5, mit einer Befestigungseinrichtung 25 befestigt. Die Befestigungseinrichtung 25 sichert das Messer 5 in Umfangsrichtung und in axialer Richtung der Drehachse 9. Die Befestigungseinrichtung 25 umfasst einen Messerträger 7, der an der dem Antriebsmotor 3 zugewandten Seite des Messers 5 angeordnet ist, sowie ein Befestigungselement 8, das an der dem Antriebsmotor 3 abgewandten Seite des Messers 5 angeordnet ist. Zum Fahren über den Boden besitzt der Rasenmäher 1 mehrere Räder 6.

Wie Fig. 2 zeigt, besitzt der Messerträger 7 eine Hülse 10, die den Messerträger 7 durchragt und mit einem Bund 45 an einer dem Antriebsmotor 3 zugewandten Oberseite 46 des Messerträgers 7 anliegt. An der Gegenseite liegt der Bund 45 an einem Absatz 47 der Antriebswelle 4 an und ist dadurch in axialer Richtung der Drehachse 9 gesichert. Die Hülse 10 stellt eine drehfeste Verbindung zwischen der Antriebswelle 4 und dem Messerträger 7 her. Hierzu besitzt die Hülse 10 in Fig. 2 nicht gezeigte Abflachungen, die mit entsprechenden Abflachungen der Antriebswelle 4 und Abflachungen in einer die Hülse 10 aufnehmenden Öffnung des Messerträgers 7 zusammenwirken.

Zur drehfesten Verbindung mit dem Messer besitzt der Messerträger 7 zwei Zapfen 12, die in entsprechende Öffnungen 13 des Messers 5 ragen. Die Zapfen 12 und die Öffnungen 13 sind auch in Fig. 3 gezeigt. Im Ausführungsbeispiel sind die beiden Zapfen 12 auf gegenüberliegenden Seiten der Drehachse 9 angeordnet. Es kann auch eine andere Anzahl von Zapfen 12 vorgesehen sein. Auch ein einziger Zapfen 12 kann zur drehfesten Verbindung des Messerträgers 7 mit dem Messer 5 ausreichend sein.

Das Befestigungselement 8 ist als Griffmutter ausgebildet, wie auch Fig. 3 zeigt. Der Messerträger 7 und das Befestigungselement 8 bestehen aus Kunststoff. In das Befestigungselement 8 ist eine Gewindehülse 11 aus einem metallischen Material eingespritzt, die in Fig. 2 gezeigt ist. Die Gewindehülse 11 ist auf die Antriebswelle 4 aufgeschraubt, die ein entsprechendes Außengewinde trägt. Das Befestigungselement 8 liegt mit der Gewindehülse 11 in Befestigungsstellung des Befestigungselements 8 am Messer 5 an. Das Befestigungselement 8 drückt das Messer 5 gegen die metallische Hülse 10 des Messerträgers 7. Dadurch wird eine gute Fixierung des Messers 5 erreicht. Der Bund 45 der Hülse 10 liegt zwischen dem Messerträger 7 und dem Absatz 47 der Antriebswelle 4. Dadurch wird auch in axialer Richtung der Drehachse 9 eine sichere Positionierung des Messers 5 und der Befestigungseinrichtung 25 erreicht.

Fig. 3 zeigt die Befestigungseinrichtung 25 im Einzelnen. Die Befestigungseinrichtung 25 besitzt zwei lösbare Fixiereinrichtungen 24, die einander gegenüberliegend angeordnet sind. Jede Fixiereinrichtung 24 besitzt ein Rastelement 15, das in einer in Fig. 3 gezeigten Sperrstellung 33 an einem Rastzahn 17 des Befestigungselements 8 einrastet. Das Befestigungselement 8 ist in einer Befestigungsrichtung 22 um die Drehachse 9 drehbar. Beim Drehen des Befestigungselements 8 in Befestigungsrichtung 22 wird die Gewindeverbindung zwischen der Gewindehülse 11 und der Antriebswelle 4 angezogen, und das Messer 5 wird gegen den Messerträger 7 gepresst. Zum Lösen des Befestigungselements 8, beispielsweise zum Austausch des Messers 5, muss das Befestigungselement 8 in einer der Befestigungsrichtung 22 entgegengerichteten Löserichtung 23 gedreht werden. Die Bewegung in Löserichtung 23 wird in Sperrstellung 33 von den Rastelementen 15 verhindert. Dadurch kann verhindert werden, dass das Befestigungselement 8 im Betrieb unbeabsichtigt in Löserichtung 23 dreht.

Zum Verdrehen des Befestigungselements 8 besitzt das Befestigungselement 8 ein Griffprofil 14, an dem der Bediener das Befestigungselement 8 greifen kann. Das Griffprofil 14 ist als ausgerundetes Sechseck ausgebildet, so dass sich eine abgerundete Sternform ergibt. Die Flanken an den nach außen weisenden abgerundeten Ecken des Griffprofils 14 verlaufen vergleichsweise steil, so dass sich eine gute Krafteinleitung in das Befestigungselement 8 ergibt.

Zum Lösen der Fixiereinrichtung 24 sind zwei Hebel 26 vorgesehen, die einander gegenüberliegend angeordnet sind. Die Hebel 26 sind am Messerträger 7 schwenkbar gelagert. Die Hebel 26 besitzen jeweils einen Betätigungsabschnitt 28, an dem der Bediener die Hebel 26 drücken und dadurch die Rastelemente 15 bezogen auf die Drehachse 9 radial nach außen auslenken kann. Dadurch gelangen die Rastelemente 15 aus dem Bereich der Rastzähne 17, und das Befestigungselement 8 kann in Löserichtung 23 verdreht werden. Die Betätigungsabschnitte 28 der Hebel 26 müssen gedrückt gehalten werden, bis das Befestigungselement 8 so weit ausgeschraubt wurde, dass die Rastelemente 15 nicht mehr in der Ebene der Rastzähne 17 liegen und in diese nicht mehr eingreifen können.

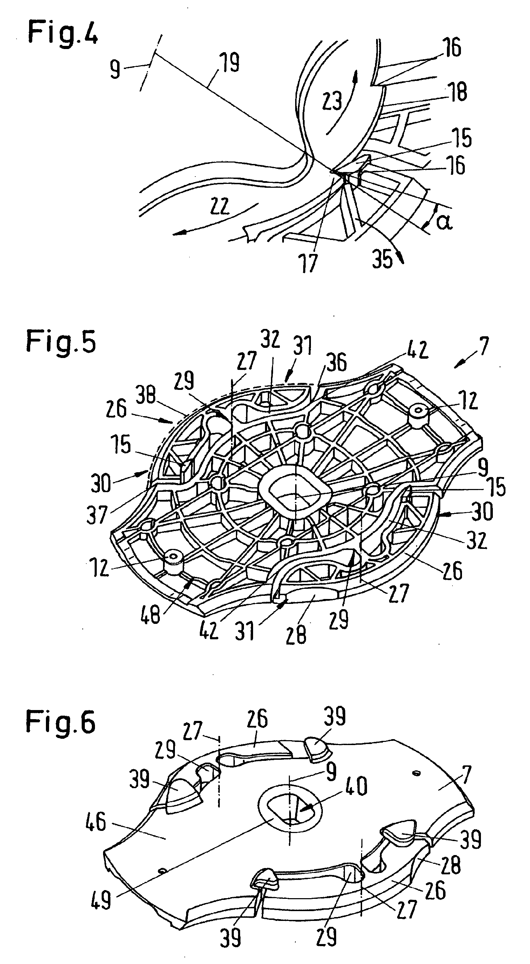

Fig. 4 zeigt die Gestaltung der Rastzähne 17 im Einzelnen. Die Rastzähne 17 besitzen jeweils eine quer zur Umfangsrichtung ausgerichtete Rastkante 16, die mit den Rastelementen 15 zusammenwirkt. Die Rastkante 16 ist dabei so ausgerichtet, dass der radial außen liegende Bereich in Löserichtung 23 vorlaufend zu dem radial innen liegenden Bereich der Rastkante 16 angeordnet ist. Die Rastkante 16 verläuft zu einer Radialen 19 zur Drehachse 9 unter einem Winkel α, der in Löserichtung 23 und radial nach außen öffnet. Der Winkel α kann beispielsweise von etwa 5° bis etwa 60° betragen. Im Ausführungsbeispiel beträgt der Winkel α zwischen 10° und 30°.

Wird der Betätigungsabschnitt 28 des Hebels 26 nach innen gedrückt, so schwenkt der Abschnitt des Hebels 26, der das Rastelement 15 trägt, in Richtung des Pfeils 35 nach außen. Aufgrund der Schrägstellung der Rastkante 16 übt das Rastelement 15 auf das Befestigungselement 8 eine Kraft in Befestigungsrichtung 22 aus. Dadurch wird ein unbeabsichtigtes Lösen des Befestigungselements 8 bei einem unbeabsichtigten Verschwenken des Hebels 26, beispielsweise aufgrund von Stößen im Betrieb, verhindert. Fig. 5 zeigt die Gestaltung des Messerträgers 7 im Einzelnen. Die beiden Zapfen 12 sind beidseitig der Drehachse 9 angeordnet. Aufgrund der Durchbiegung des Messers 5 im Betrieb kann geringes Spiel zwischen den Zapfen 12 und den Öffnungen 13 im Messer 5 (Fig. 2) ausgeglichen werden. Dadurch wird eine drehfeste Verbindung zwischen dem Messer 5 und dem Messerträger 7 erreicht. Wie Fig. 5 auch zeigt, besitzt der Messerträger 7 eine Aufnahme 48 für das Messer 5, die als Vertiefung ausgeführt ist. Der Messerträger 7 besitzt dabei eine Vielzahl von Versteifungsstreben, die die Aufnahme 48 begrenzen. Die Hebel 26 sind seitlich vom Messer 5 und mindestens teilweise in der gleichen senkrecht zur Drehachse 9 ausgerichteten Ebene wie das Messer 5 angeordnet. Die Rastelemente 15 ragen über die Ebene des Messers 5 hinaus in den Bereich des Befestigungselements 8. Dies ist auch in Fig. 3 gezeigt.

Wie Fig. 5 zeigt, sind die beiden Hebel 26 über Biegeelemente 29 mit dem Messerträger 7 verbunden. Die Biegeelemente 29 sind elastisch. Vorzugsweise spannen die Biegeelemente 29 die Hebel 26 in Richtung auf ihre Sperrstellung 33 vor. Im Ausführungsbeispiel sind die Biegeelemente 29 als schmale Stege ausgeführt, die einteilig mit dem Messerträger 7 und den Hebeln 26 ausgeführt sind. Dadurch werden für die Hebel 26 und die Biegeelemente 29 keine zusätzlichen Bauteile benötigt. Die elastische Anbindung ergibt sich aufgrund der Eigenelastizität des Kunststoffs, aus dem der Messerträger 7 mit den Hebeln 26 und den Biegeelementen 29 besteht.

Die Hebel 26 sind um Schwenkachsen 27 schwenkbar, die parallel zur Drehachse 9 verlaufen. Die beiden Hebel 26 sind achsensymmetrisch zur Drehachse 9 am Messerträger 7 angeordnet. Die beiden Hebel 26 besitzen jeweils einen ersten Arm 30, in dessen Endbereich ein Rastelement 15 angeordnet ist. Auch eine andere Anzahl von Rastelementen 15 je Hebel 26 kann vorteilhaft sein. Die Hebel 26 besitzen jeweils einen gegenüberliegenden, zweiten Arm 31, an dem der Betätigungsabschnitt 28 ausgebildet ist. In Löserichtung 23 (Fig. 4) ist der Betätigungsabschnitt 28 jedes Hebels jeweils vor dem Rastelement 15 dieses Hebels angeordnet. Der erste Arm 30 erstreckt sich vom Biegeelement 29 aus in Befestigungsrichtung 22 und der zweite Arm 31 erstreckt sich vom Biegeelement 29 aus in Löserichtung 23.

Wie Fig. 5 auch zeigt, sind die Hebel 26 jeweils in einer Vertiefung 32 des Messerträgers 7 angeordnet. Die Vertiefungen 32 besitzen jeweils eine erste Außenkante 36 und eine zweite Außenkante 37, an der die Vertiefung 32 in Umfangsrichtung beginnt bzw. endet. Der Hebel 26 liegt vollständig innerhalb eines in Fig. 5 mit gestrichelter Linie angedeuteten Kreisbogens 38, der sich von der ersten Außenkante 36 zur zweiten Außenkante 37 erstreckt und dessen Mittelpunkt auf der Drehachse 9 liegt. Dadurch liegen die Hebel 26 vollständig im Windschatten des Messerträgers 7. Dadurch wird ein günstiges Geräuschverhalten erreicht, und ein unbeabsichtigtes Betätigen der Hebel 26 im Betrieb, beispielsweise durch Kontakt mit Steinen oder dergleichen wird vermieden.

Wie Fig. 4 zeigt, besitzt jeder Rastzahn 17 eine nach außen weisende Flanke 18, die zur Umfangsrichtung geringfügig geneigt ist. Die Flanke 18 ist im Ausführungsbeispiel bogenförmig ausgebildet. Auch ein gerader Verlauf der Flanke 18 kann jedoch vorteilhaft sein. Aufgrund der Gestaltung der Flanke 18 werden die Rastelemente 15 beim Verdrehen des Befestigungselements 8 in Befestigungsrichtung 22 nach außen ausgelenkt. Dadurch müssen die Hebel 26 beim Anziehen des Befestigungselements 8, also beim Verdrehen in Befestigungsrichtung 22, nicht betätigt werden. Dadurch ergibt sich eine einfache, ergonomische Bedienung.

Wie Fig. 5 auch zeigt, ist zwischen der Vertiefung 32 und den zweiten Armen 31 der Hebel 26 jeweils ein Anschlag 42 gebildet. Dadurch wird ein übermäßiges Verschwenken der Hebel 26 vermieden. Der Anschlag 42 ist so ausgelegt, dass die Rastelemente 15 sicher von den Rastzähnen 17 gelöst werden können.

Fig. 6 zeigt die Oberseite 46 des Messerträgers 7. Der Messerträger 7 besitzt eine Öffnung 40 für die in Fig. 2 gezeigte Hülse 10. Zur drehfesten Verbindung mit der Hülse 10 ist der Querschnitt der Öffnung 40 abgeflacht ausgebildet. Die Oberseite 46 besitzt benachbart zur Öffnung 40 eine Anlagefläche 49 für den Bund 45 der Hülse 10. Wie Fig. 6 auch zeigt, sind benachbart zu den freien Enden der Hebel 26 am Messerträger 7 jeweils Abdeckungen 39 angeformt, die die Enden der Hebel 26 in Richtung der Drehachse 9 überdecken. Die Abdeckungen 39 bilden jeweils einen Anschlag für die Hebel 26, der ein übermäßiges Biegen der Hebel 26 in Richtung der Drehachse 9, also in Richtung auf den Antriebsmotor 3, verhindert.

Wie Fig. 4 zeigt, überdeckt in Gegenrichtung das Befestigungselement 8 die freien Enden der Hebel 26. Dies ist auch in Fig. 3 gezeigt. Dadurch wird eine übermäßige Durchbiegung der Hebel 26 in die Gegenrichtung, also vom Antriebsmotor 3 weg, verhindert.

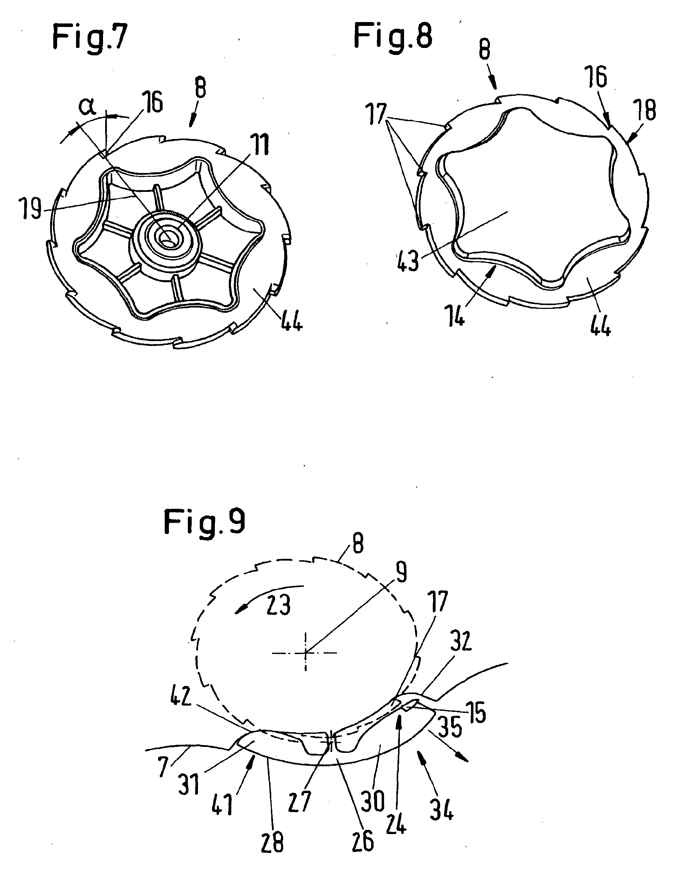

Die Figuren 7 und 8 zeigen das Befestigungselement 8 im Einzelnen. In Fig. 7 ist der Winkel α der Rastkante 16 zur Radialen 19 gezeigt. Außerdem ist die Anordnung der Gewindehülse 11 im Befestigungselement 8 gezeigt. Wie die Figuren 7 und 8 zeigen, besitzt das Befestigungselement 8 einen Rand 44, an dem die Rastzähne 17 ausgebildet sind. Der Rand 44 erstreckt sich vom Griffprofil 14 in einer Ebene benachbart zum Messerträger 7 nach außen. In der Ebene des Rands 44 liegen die Rastelemente 15. Wie Fig. 8 zeigt, ist eine Außenseite 43 des Befestigungselements 8, die dem Messer 5 abgewandt liegt, als geschlossene Oberfläche ausgebildet. Dadurch ist die Gewindehülse 11 vor Verschmutzung und Korrosion geschützt. Wie die Figuren 7 und 8 zeigen, ist eine Vielzahl von Rastzähnen 17 vorgesehen. Im Ausführungsbeispiel sind zwölf Rastzähne 17 vorgesehen, die nach Art einer Ratsche wirken und die möglichen Raststellungen für das Befestigungselement 8 festlegen. Vorteilhaft sind mindestens vier, insbesondere mindestens acht Rastzähne 17 vorgesehen. Auch die Anordnung der Flanken 18 ist in Fig. 8 gezeigt.

Fig. 9 zeigt einen Hebel 26 schematisch in einer Freigabestellung 34, in der die Fixiereinrichtung 24 das Befestigungselement 8 freigibt, das dadurch in Löserichtung 23 gedreht werden kann. In dieser nach außen geschwenkten Stellung liegt der Arm 31 des Hebels 26 am Anschlag 42 an. Das Rastelement 15 ist aufgrund einer Betätigung des Hebels 26 in Richtung des Pfeils 41 am Betätigungsabschnitt 28 um die Schwenkachse 27 verschwenkt. Dadurch ist der erste Arm 30 in Richtung des Pfeils 35 nach außen ausgelenkt worden, wodurch das Rastelement 15 aus dem Bereich des Rastzahns 17 ausgelenkt wurde.

Die Befestigungseinrichtung 25 besitzt eine geringe Bauhöhe. Dadurch kann das Messer nah am Antriebsmotor 3 angeordnet werden. Da die Rastelemente 15 und die Hebel 26 für den Bediener sichtbar sind, ist das Funktionsprinzip für den Bediener einfach erkennbar, wodurch sich eine einfache, selbsterklärende Handhabung ergibt. Die Aufnahme 48 im Messerträger 7 für das Messer 5 ist vergleichsweise lang ausgebildet. Dadurch wird das Messer gegen eine Aufbiegung aufgrund der Fliehkraft im Bereich des größten Biegemoments unterstützt. Beim Anziehen des Befestigungselements 8 kann der Bediener den äußeren Bereich des Messerträgers 7 greifen, um gegenzuhalten. Dadurch, dass die Kräfte des Messers 5 in Umfangsrichtung direkt über den Messerträger 7 abgefangen werden, wird eine sichere Befestigung des Messers 5 unabhängig von der Drehrichtung der Antriebswelle 4 erreicht. Um das Messer 5 zu befestigen, wird das Messer 5 in die Aufnahme 48 des Messerträgers 7 gelegt, und zwar so, dass die Zapfen 12 durch die Öffnungen 13 des Messers 5 ragen (Fig. 2 und Fig. 5). Anschließend wird das Befestigungselement 8 auf die Antriebswelle 4 aufgeschraubt, um das Messer 5 in Längsrichtung der Drehachse 9 zu fixieren, wie Fig. 2 zeigt. Beim Verdrehen des Befestigungselements 8 in Befestigungsrichtung 22 (Fig. 3) gleiten die Rastelemente 15 an den Flanken 18 der Rastzähne 17 ab (Fig. 4) und bewegen sich jeweils an den Rastkanten 16 radial nach innen zur nächsten Flanke 18. Dabei verursachen die Rastelemente 15 ein vom Bediener deutlich wahrnehmbares Rastgeräusch. Beim Anziehen des Befestigungselements 8 ist für den Bediener dadurch deutlich hörbar, ob die Fixiereinrichtung 24 funktionstüchtig ist. Die Lautstärke des Rastgeräuschs kann durch Auslegung der Vorspannung des Hebels 26 und der Geometrie der Rastzähne 17 geeignet angepasst werden.

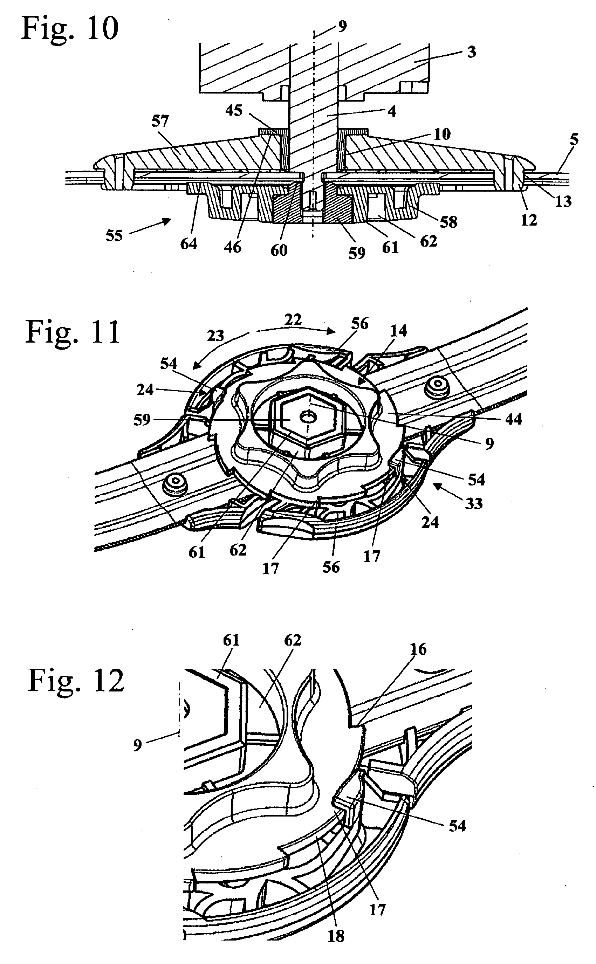

Die Fig. 10 bis 16 zeigen ein Ausführungsbeispiel einer Befestigungseinrichtung 55, wobei gleiche Bezugszeichen einander entsprechende Elemente bezeichnen. Ergänzend wird auf die Beschreibung zu den vorangegangenen Figuren verwiesen.

Wie Fig. 10 zeigt, umfasst die Befestigungseinrichtung 55 einen Messerträger 57 und ein Befestigungselement 58. Der Messerträger 57 entspricht im Wesentlichen dem Messerträger 7 aus den vorangegangenen Figuren, und das Befestigungselement 58 entspricht im Wesentlichen dem Befestigungselement 8. Das Befestigungselement 58 besitzt eine Sechskantmutter 59, mit der das Befestigungselement 58 auf die Antriebswelle 4 aufgeschraubt ist. In vollständig festgeschraubtem Zustand liegt die Sechskantmutter 59 mit einem Fortsatz 60 am Messer 5 an und drückt das Messer 5 gegen die Hülse 10. Die Sechskantmutter 59 besteht, wie auch die Hülse 10, aus Metall. Wie Fig. 10 auch zeigt, ist das Gewinde der Sechskantmutter 59 nicht durchgängig ausgebildet. Dadurch ist eine Falschmontage des Befestigungselements 58 vermieden.

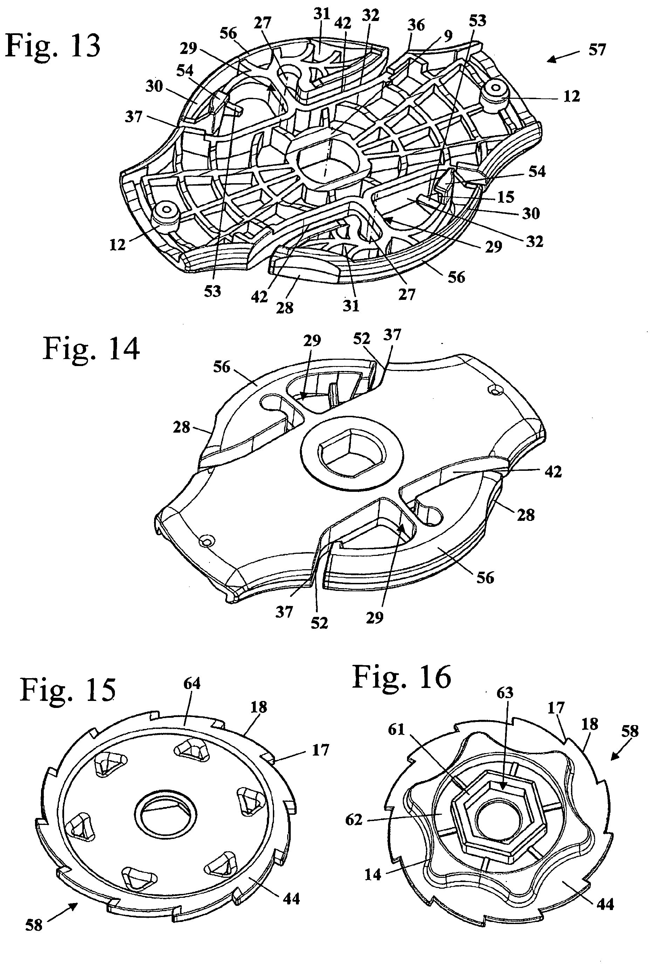

Wie die Figuren 10 und 11 zeigen, besitzt das Befestigungselement 58 eine Wand 61, die am Außenumfang der Sechskantmutter 59 anliegt und die Sechskantmutter 59 eng umgibt und drehfest am Befestigungselement 58 hält. Die Sechskantmutter 59 ist vorteilhaft in die von der Wand 61 begrenzte Aufnahme 63 (Fig. 16) eingepresst. Die Wand 61 besitzt einen sechseckigen Außenumfang, der vorteilhaft einer gängigen Schlüsselweite entspricht. Am Außenumfang der Wand 61 ist eine Aussparung 62 angeordnet, die sich umlaufend zwischen der Wand 61 und dem Griffprofil 14 erstreckt. An der Aussparung 62 kann ein Schraubenschlüssel angeordnet werden, der an der Wand 61 angreift und mit dem das Befestigungselement 58 schnell montiert oder, insbesondere, wenn sich die Sechskantmutter 59 festgesetzt hat, gelöst werden kann. Anstatt eines Sechskants kann auch eine andere unregelmäßige, zum Eingriff eines Werkzeugs geeignete Außenkontur vorgesehen sein. Es kann auch vorteilhaft sein, eine Kontur zum Eingriff eines Werkzeugs an der Stirnseite eines statt der Sechskantmutter 59 vorgesehenen Gewindeelements vorzusehen.

Wie die Figuren 11 und 12 zeigen, besitzt der Messerträger 57 benachbart zu den in den Figuren 11 und 12 nicht sichtbaren Rastelementen 15 jeweils eine Abdeckung 54, die die Fixiereinrichtung 24 abdeckt. Die Abdeckung 54 erstreckt sich an der dem Hebel 56 gegenüberliegenden Seite des Befestigungselements 58. Dadurch ist der Rand 44 des Befestigungselements 58 in Richtung der Drehachse 9 zwischen dem Hebel 56 und der Abdeckung 54 gehalten. Selbst wenn am Befestigungselement 58 eine übermäßig große Kraft in Löserichtung 23 (Fig. 11) ausgeübt wird, kann das Rastelement 15 aufgrund der Abdeckung 54 nicht in Richtung der Drehachse 9 ausgelenkt werden und dadurch die Verrastung von Rastelement 15 und Rastzahn 17 gelöst werden. Die in den Figuren 11 und 12 verdeckten Rastelemente sind entsprechend den in den Figuren 3 bis 5 gezeigten Rastelementen 15 ausgebildet und angeordnet. In Fig. 13 ist eines der Rastelemente 15 gezeigt.

Die Figuren 13 und 14 zeigen den Messerträger 57 im Einzelnen. Der Messerträger 57 besitzt zwei einander gegenüberliegend angeordnete, achsensymmetrisch zur Drehachse 9 ausgebildete Hebel 56. Jeder Hebel 56 besitzt einen ersten Arm 30, an dem ein Rastelement 15 und eine Abdeckung 54 angeordnet sind. Jeder Hebel 56 besitzt einen zweiten Arm 31, der sich vom Biegeelement 29 in die entgegengesetzte Umfangsrichtung erstreckt wie der erste Arm 30. An jedem zweiten Arm 31 ist ein Betätigungsabschnitt 28 angeordnet, an dem der Bediener den Hebel 56 nach innen schwenken und dadurch die Fixiereinrichtung 24 lösen kann. Fig. 13 zeigt auch den benachbart zu jedem Arm 31 an der Vertiefung 32 ausgebildeten Anschlag 42. Für die ersten Arme 30 ist benachbart zu den zweiten Außenkanten 37 der Vertiefungen 32 jeweils ein Anschlag 52 ausgebildet, wie Fig. 14 zeigt.

Wie die Figuren 13 und 14 zeigen, sind die ersten Arme 30 schmaler ausgebildet als die zweiten Arme 31. Die ersten Arme 30 besitzen ein geringeres Gewicht als die zweiten Arme 31. Im Betrieb übt die an den Hebeln 56 wirkende Fliehkraft dadurch ein Moment auf die Hebel 56 um die zugehörige Schwenkachse 27 aus, das in Richtung auf die Sperrstellung 33 wirkt. Dadurch ist ein Lösen der Fixiereinrichtung 24 im Betrieb sicher vermieden. Aufgrund der schmaleren Gestaltung des ersten Arms 30 ergibt sich nur eine geringe Überdeckung des ersten Arms 30 mit dem Rand 44 des Befestigungselements 58. Um eine übermäßige Durchbiegung des ersten Arms 30 in Richtung der Drehachse 9 zu vermeiden, ist am Arm 30 ein nach innen ragender Steg 53 angeordnet. Wird der erste Arm 30 in Richtung auf den Antriebsmotor 4 gebogen, so kommt der Steg 53 zur Anlage am Rand 44 des Befestigungselements 58 (Fig. 15 und 16) und bildet mit diesem einen Anschlag, der eine weitere Verformung des ersten Arms 30 in diese Richtung verhindert. Es kann auch vorgesehen sein, die beiden Arme 30 und 31 so auszubilden, dass beide Arme 30 und 31 von der im Betrieb sichtbaren Seite gleich aussehen und ein größeres Gewicht der zweiten Arme 31 durch andere Maßnahmen, beispielsweise eine abweichend zum ersten Arm 30 gestaltete Verrippung, durch Materialanhäufung oder dgl. zu erreichen.

Die Figuren 15 und 16 zeigen die Gestaltung der Rastzähne 17 und der Flanken 18, die der zum Ausführungsbeispiel nach den Figuren 1 bis 9 beschriebenen Gestaltung entspricht. Wie Fig. 15 zeigt, besitzt das Befestigungselement 58 eine Auflagefläche 64, mit der das Befestigungselement 58 in befestigtem Zustand am Messer 5 anliegt und das Messer 5 gegen die Hülse 10 oder den Messerträger 57 (Fig. 10) drückt. Das Messer 5 ist dadurch unter axialer Vorspannung an der Antriebswelle 4 gehalten. Die Sechskantmutter 59 bildet mit dem Messer 5 und der Hülse 10 dabei einen Anschlag für die elastische Verformung des Befestigungselements 58. In Fig. 16 ist auch die von der Wand 61 begrenzte Aufnahme 63 gezeigt. Wie Fig. 16 zeigt, besitzt das Befestigungselement 58 sowohl das Griffprofil 14 zur werkzeuglosen Betätigung als auch die Wand 61, die zum Eingriff eines Werkzeugs beim Lösen oder Festziehen des Befestigungselements 58 mit einem Werkzeug dient.

## Patentansprüche

1. Arbeitsgerät mit einem Antriebsmotor (3), der mindestens ein Messer (5) um eine Drehachse (9) rotierend antreibt, wobei das Messer (5) mit der Antriebswelle (4) des Antriebsmotors (3) über eine lösbare Befestigungseinrichtung (25, 55) drehfest verbunden ist, wobei die Befestigungseinrichtung (25, 55) einen drehfest mit der Antriebswelle (4) verbundenen Messerträger (7, 57) umfasst, an dem das Messer (5) drehfest gehalten ist, wobei die Befestigungseinrichtung (25, 55) ein Befestigungselement (8, 58) besitzt, das durch Drehen um die Drehachse (9) des Messers (5) in einer Befestigungsrichtung (22) in eine Befestigungsstellung verstellbar ist, wobei das Messer (5) in der Befestigungsstellung des Befestigungselements (8, 58) in axialer Richtung der Drehachse (9) an dem Messerträger (7, 57) gesichert ist,
**dadurch gekennzeichnet, dass** die Befestigungseinrichtung (25, 55) eine lösbare Fixiereinrichtung (24) besitzt, die das Befestigungselement (8, 58) in Befestigungsstellung gegen ein Verdrehen in einer der Befestigungsrichtung (22) entgegengerichteten Löserichtung (23) sichert.

2. Arbeitsgerät nach Anspruch 1,
**dadurch gekennzeichnet, dass** die Fixiereinrichtung (24) mindestens ein Rastelement (15) besitzt, das mit mindestens einem Rastzahn (17) zusammenwirkt.

3. Arbeitsgerät nach Anspruch 2,
**dadurch gekennzeichnet, dass** der Rastzahn (17) eine Rastkante (16) besitzt, die gegenüber einer Radialen (19) zur Drehachse (9) um einen Winkel (α) geneigt ist, der in Löserichtung (23) und bezogen auf die Drehachse (9) radial nach außen öffnet, wobei der Winkel (α) insbesondere von etwa 5° bis etwa 60° beträgt.

4. Arbeitsgerät nach Anspruch 2 oder 3,
**dadurch gekennzeichnet, dass** der Rastzahn (17) eine Flanke (18) besitzt, die beim Bewegen des Befestigungselements (8, 58) in Befestigungsrichtung (22) das Rastelement (15) auslenkt.

5. Arbeitsgerät nach einem der Ansprüche 2 bis 4,
**dadurch gekennzeichnet, dass** das Befestigungselement (8) mindestens vier, insbesondere mindestens acht Rastzähne (17) besitzt, die gleichmäßig am Umfang des Befestigungselements (8, 58) verteilt angeordnet sind.

6. Arbeitsgerät nach einem der Ansprüche 2 bis 5,
**dadurch gekennzeichnet, dass** das Rastelement (15) an einem Hebel (26, 56) angeordnet ist, der um eine Schwenkachse (27) schwenkbar gelagert ist.

7. Arbeitsgerät nach Anspruch 6,
**dadurch gekennzeichnet, dass** der Hebel (26, 56) einen Betätigungsabschnitt (28) besitzt, wobei der Betätigungsabschnitt (28) und das Rastelement (15) auf gegenüberliegenden Seiten der Schwenkachse (27) angeordnet sind.

8. Arbeitsgerät nach Anspruch 6 oder 7,
**dadurch gekennzeichnet, dass** zwei einander gegenüberliegend angeordnete Hebel (26, 56) mit jeweils mindestens einem Rastelement (15) vorgesehen sind.

9. Arbeitsgerät nach einem der Ansprüche 6 bis 8,
**dadurch gekennzeichnet, dass** der Hebel (26, 56) in Umfangsrichtung zur Drehachse (9) des Messers (5) ausgerichtet ist.

10. Arbeitsgerät nach einem der Ansprüche 6 bis 9,
**dadurch gekennzeichnet, dass** der Hebel (26, 56) am Messerträger (7) gelagert ist.

11. Arbeitsgerät nach Anspruch 10,
**dadurch gekennzeichnet, dass** der Hebel (26, 56) über mindestens ein elastisches Biegeelement (29) mit dem Messerträger (7, 57) verbunden ist, wobei der Messerträger (7, 57) insbesondere einteilig mit dem Hebel (26, 56) und dem Biegeelement (29) ausgebildet ist.

12. Arbeitsgerät nach einem der Ansprüche 6 bis 11,
**dadurch gekennzeichnet, dass** der Hebel (26, 56) eine Sperrstellung (33) besitzt, in der das Befestigungselement (8, 58) gegen ein Verdrehen in Löserichtung (23) gesichert ist, und dass der Hebel (26, 56) eine Freigabestellung (34) besitzt, wobei der Hebel (26, 56) beim Verschwenken von der Sperrstellung (33) in die Freigabestellung (34) auf das Befestigungselement (8, 58) eine Kraft in Befestigungsrichtung (22) ausübt.

13. Arbeitsgerät nach einem der Ansprüche 9 bis 12,
**dadurch gekennzeichnet, dass** der Messerträger (7, 57) eine Vertiefung (32) besitzt, in der der Hebel (26, 56) angeordnet ist, wobei der Hebel (26, 56) insbesondere nicht über einen Kreisbogen (38) hinausragt, der sich von einer ersten Außenkante (36) der Vertiefung zu einer zweiten Außenkante (37) der Vertiefung (32) erstreckt und dessen Mittelpunkt auf der Drehachse (9) liegt.

14. Arbeitsgerät nach einem der Ansprüche 9 bis 13,
**dadurch gekennzeichnet, dass** das Befestigungselement (8, 58) mindestens einen Abschnitt des Hebels (26, 56) in Richtung der Drehachse (9) überdeckt.

15. Arbeitsgerät nach einem der Ansprüche 1 bis 14,
**dadurch gekennzeichnet, dass** das Befestigungselement (8, 58) ein Gewinde besitzt und auf die Antriebswelle (4) aufschraubbar ist.

16. Arbeitsgerät nach einem der Ansprüche 1 bis 15,
**dadurch gekennzeichnet, dass** das Befestigungselement (58) ein Griffprofil (14) und eine Eingriffskontur für ein Werkzeug besitzt.

## Claims

1. Working implement with a drive motor (3), which drives at least one blade (5) to rotate about an axis of rotation (9), wherein the blade (5) is non-rotatably connected to the drive shaft (4) of the drive motor (3) via a releasable fastening device (25, 55), wherein the fastening device (25, 55) comprises a blade support (7, 57), which is non-rotatably connected to the drive shaft (4) and on which the blade (5) is non-rotatably held, wherein the fastening device (25, 55) comprises a fastening element (8, 58), which can be moved into a fastening position by rotation about the axis of rotation (9) of the blade (5) in a fastening direction (22), wherein the blade (5) is in the fastening position of the fastening element (8, 58) secured to the blade support (7, 57) in the axial direction of the axis of rotation (9),
**characterised in that** the fastening device (25, 55) comprises a releasable fixing device (24), which secures the fastening element (8, 58) in the fastening position against rotation in a release direction (23) opposed to the fastening direction (22).

2. Working implement according to claim 1,
**characterised in that** the fixing device (24) comprises at least one latching element (15), which acts together with at least one latching tooth (17).

3. Working implement according to claim 2,
**characterised in that** the latching tooth (17) has a latching edge (16), which is inclined relative to a radial (19) to the axis of rotation (9) by an angle (α), which opens radially outwards in the release direction (23) and relative to the axis of rotation (9), the angle (α) being in particular approximately 5° to 60°.

4. Working implement according to claim 2 or 3,
**characterised in that** the latching tooth (17) has a flank (18), which deflects the latching element (15) when the fastening element (8, 58) is moved in the fastening direction (22).

5. Working implement according to any of claims 2 to 4,
**characterised in that** the fastening element (8) comprises at least four and in particular at least eight latching teeth (17), which are evenly distributed along the circumference of the fastening element (8, 58).

6. Working implement according to any of claims 2 to 5,
**characterised in that** the latching element (15) is located on a lever (26, 56), which is pivotably mounted about a pivot axis (27).

7. Working implement according to claim 6,
**characterised in that** the lever (26, 56) has an operating section (28), the operating section (28) and the latching element (15) being arranged on opposite sides of the pivot axis (27).

8. Working implement according to claim 6 or 7,
**characterised in that** two levers (26, 56) are arranged opposite each other with at least one latching element (15) each.

9. Working implement according to any of claims 6 to 8,
**characterised in that** the lever (26, 56) is oriented in the circumferential direction relative to the axis of rotation (9) of the blade (5).

10. Working implement according to any of claims 6 to 9,
**characterised in that** the lever (26, 56) is bearing-mounted on the blade support (7).

11. Working implement according to claim 10,
**characterised in that** the lever (26, 56) is joined to the blade support (7, 57) via at least one elastic bending element (29), the blade support (7, 57) in particular forming a single piece together with the lever (26, 56) and the bending element (29).

12. Working implement according to any of claims 6 to 11,
**characterised in that** the lever (26, 56) has a locking position (33), in which the fastening element (8, 58) is secured against turning in the release direction (23), and **in that** that the lever (26, 56) has a release position (34), the lever (26, 56) applying a force in the fastening direction (22) to the fastening element (8, 58) when pivoting from the locking position (33) into the release position (34).

13. Working implement according to any of claims 9 to 12,
**characterised in that** the blade support (7, 57) has a recess (32), in which the lever (26, 56) is accommodated, the lever (26, 56) in particular not projecting beyond a circular arc (38) extending from a first outer edge (36) of the recess (32) to a second outer edge (37) of the recess (32), its centre lying on the axis of rotation (9).

14. Working implement according to any of claims 9 to 13,
**characterised in that** the fastening element (8, 58) covers at least a section of the lever (26, 56) in the direction of the axis of rotation (9).

15. Working implement according to any of claims 1 to 14,
**characterised in that** the fastening element (8, 58) has a thread and can be screwed onto the drive shaft (4).

16. Working implement according to any of claims 1 to 15,
**characterised in that** the fastening element (58) has a gripping profile (14) and an engagement contour for a tool.

## Revendications

1. Appareil de travail avec un moteur d'entraînement (3) qui entraîne au moins une lame (5) en rotation sur un axe de rotation (9), étant précisé que la lame (5) est reliée fixe en rotation à l'arbre d'entraînement (4) du moteur d'entraînement (3) par l'intermédiaire d'un dispositif d'attache amovible (25, 55), que le dispositif d'attache (25, 55) comprend un porte-lame (7, 57), relié fixe en rotation à l'arbre d'entraînement (4), sur lequel la lame (5) est retenue fixe en rotation, que le dispositif d'attache (25, 55) comporte un élément d'attache (8, 58) qui est apte à être amené dans une position d'attache grâce à une rotation sur l'axe de rotation (9) de la lame (5) dans un sens d'attache (22), et que la lame (5), dans la position d'attache de l'élément d'attache (8, 58), est bloquée sur le porte-lame (7, 57) dans le sens axial de l'axe de rotation (9),
**caractérisé en ce que** le dispositif d'attache (25, 55) comporte un dispositif de fixation amovible (24) qui bloque l'élément d'attache (8, 58), dans la position d'attache, à l'encontre d'une rotation dans un sens de desserrage (23) opposé au sens d'attache (22).

2. Appareil de travail selon la revendication 1,
**caractérisé en ce que** le dispositif de fixation (24) comporte au moins un élément d'arrêt (15) qui coopère avec au moins une dent d'arrêt (17).

3. Appareil de travail selon la revendication 2,
**caractérisé en ce que** la dent d'arrêt (17) comporte un bord d'arrêt (16) qui est incliné par rapport à une ligne radiale (19) par rapport à l'axe de rotation (9) suivant un angle (α) qui s'ouvre dans le sens de desserrage (23) et radialement vers l'extérieur par rapport à l'axe de rotation (9), étant précisé que l'angle (α) est en particulier d'environ 5° à environ 60°.

4. Appareil de travail selon la revendication 2 ou 3,
**caractérisé en ce que** la dent d'arrêt (17) présente un flanc (18) qui, lors du mouvement de l'élément d'attache (8, 58) dans le sens d'attache (22), dévie l'élément d'arrêt (15).

5. Appareil de travail selon l'une des revendications 2 à 4,
**caractérisé en ce que** l'élément d'attache (8) comporte au moins quatre, en particulier au moins huit dents d'arrêt (17) qui sont réparties uniformément sur la circonférence de l'élément d'attache (8, 58).

6. Appareil de travail selon l'une des revendications 2 à 5,
**caractérisé en ce que** l'élément d'arrêt (15) est disposé sur un levier (26, 56) qui est monté pivotant sur un axe de pivotement (27).

7. Appareil de travail selon la revendication 6,
**caractérisé en ce que** le levier (26, 56) comporte une section d'actionnement (28), étant précisé que la section d'actionnement (28) et l'élément d'arrêt (15) sont disposés sur des côtés opposés de l'axe de pivotement (27).

8. Appareil de travail selon la revendication 6 ou 7,
**caractérisé en ce qu'**il est prévu deux leviers (26, 56), qui sont disposés à l'opposé l'un de l'autre et qui sont pourvus chacun d'au moins un élément d'arrêt (15).

9. Appareil de travail selon l'une des revendications 6 à 8,
**caractérisé en ce que** le levier (26, 56) est orienté dans le sens circonférentiel par rapport à l'axe de rotation (9) de la lame (5).

10. Appareil de travail selon l'une des revendications 6 à 9,
**caractérisé en ce que** le levier (26, 56) est monté sur le porte-lame (7).

11. Appareil de travail selon la revendication 10,
**caractérisé en ce que** le levier (26, 56) est relié au porte-lame (7, 57) par l'intermédiaire d'au moins un élément de flexion élastique (29), étant précisé que le porte-lame (7, 57) est conçu en particulier d'une seule pièce avec le levier (26, 56) et l'élément de flexion (29).

12. Appareil de travail selon l'une des revendications 6 à 11,
**caractérisé en ce que** le levier (26, 56) présente une position de blocage (33) dans laquelle l'élément d'attache (8, 58) est bloqué à l'encontre d'une rotation dans le sens de desserrage (23), et **en ce que** le levier (26, 56) présente une position de déblocage (34), étant précisé que le levier (26, 56), lors du pivotement de la position de blocage (33) jusqu'à la position de déblocage (34), exerce sur l'élément d'attache (8, 58) une force dans le sens d'attache (22).

13. Appareil de travail selon l'une des revendications 9 à 12,
**caractérisé en ce que** le porte-lame (7, 57) comporte un creux (32) dans lequel est disposé le levier (26, 56), étant précisé que le levier (26, 56), en particulier, ne dépasse pas d'un arc de cercle (38) qui s'étend d'un premier bord extérieur (36) du creux jusqu'à un second bord extérieur (37) du creux (32) et dont le centre est situé sur l'axe de rotation (9).

14. Appareil de travail selon l'une des revendications 9 à 13,
**caractérisé en ce que** l'élément d'attache (8, 58) recouvre au moins une section du levier (26, 56) dans le sens de l'axe de rotation (9).

15. Appareil de travail selon l'une des revendications 1 à 14,
**caractérisé en ce que** l'élément d'attache (8, 58) présente un filetage et est apte à être vissé sur l'arbre d'entraînement (4).

16. Appareil de travail selon l'une des revendications 1 à 15,
**caractérisé en ce que** l'élément d'attache (58) présente un profil de préhension (14) et un contour d'accouplement pour un outil.
